# EUROPÄISCHE PATENTSCHRIFT

(11) **EP 2 141 360 B1**
(45) Veröffentlichungstag und Bekanntmachung des Hinweises auf die Patenterteilung: **05.04.2017**
(21) Anmeldenummer: 09172492.2
(22) Anmeldetag: 23.09.2005
(51) Int. Cl.: F03D 80/00, F03D 9/00, H02K 9/26, H02K 7/18

(54) **Windenergieanlage mit einer Generatorkühlung**
Wind turbine comprising a generator cooling system
Eolienne pourvue d'un système de refroidissement du générateur

(30) Priorität: 24.09.2004 DE 102004046700
(43) Veröffentlichungstag der Anmeldung: 06.01.2010
(62) Teilanmeldung aus: 05796218.5
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- EP-A- 1 586 769
- WO-A1-01/06121
- CH-A- 522 316
- US-A- 5 557 153

## Beschreibung

Die vorliegende Erfindung betrifft eine Windenergieanlage mit einem Turm, mit einer auf dem Turm drehbar gelagerten Gondel, einem innerhalb der Gondel angeordneten Generator mit Läufer und Ständer und mit wenigstens einem Lüfter im Bereich der Gondel.

Solche Windenergieanlagen sind seit langer Zeit im Stand der Technik bekannt. Es gibt eine Vielzahl von Ausführungsformen, die teils mit Ölkühlung teils mit Luftkühlung oder auch mit Wasserkühlung arbeiten. Dabei ergibt sich in allen Fällen das Problem, dass Verluste auftreten, die auch in Form von Wärme auftreten und abgeführt werden müssen. Da jede Komponente bestimmte thermische Belastungsgrenzen hat, die eingehalten werden müssen, muss also eine ausreichende Kühlung vorgesehen sein, um die überschüssige Wärme abführen und eine Beschädigung durch überhöhte Temperaturen vermeiden zu können.

Die Erfindung ist insbesondere auf Windenergieanlagen gerichtet, die mit Luftkühlung arbeiten. Derartige Kühlsysteme sind aus den Windenergieanlagen der Firma Enercon (Typen E-40, E-44, E-58 oder auch E-66) bekannt. Dabei ist ein Ventilator in der Gondel eingelassen, welcher Kühlluft von außen her ansaugt und in das Innere der Gondel bläst, so dass die Kühlluft durch Öffnung des Generators strömt und hierbei die einzelnen sich erwärmenden Bauteile kühlt. Die erwärmte Luft strömt dann regelmäßig entweder in einen geschlossenen Kühlkreislauf zurück oder tritt durch den Luftspalt zwischen dem Spinner und dem feststehenden Teil der Gondel nach außen weg.

Mit dem Ansteigen der Leistung der Generatoren steigt auch der Kühlbedarf dieser Generatoren an, um deren Temperaturen auch im Volllastbetrieb unterhalb kritischer Grenzen sicher halten zu können.

Bei den Windenergieanlagen gemäß dem Stand der Technik handelt es sich um einen sogenannten Luv-Läufer. D. h., die Gondel der Windenergieanlage ist derart ausgerichtet, dass sich die Rotorblätter an der dem Wind zugewandten Seite der Gondel befinden. Auf der an der vom Wind abgewandten Seilte (der Leeseite) in der Gondel-Wandlung ist ein Lüfter angeordnet. Dieser Lüfter saugt Luft von außen an und befördert sie in die Gondel. Dort umströmt die Luft die Bauteile in der Gondel und sorgt so für einen Wärmeabtransport und damit für eine Kühlung.

Allerdings werden beim Betrieb des Lüfters auch in der Luft vorhandener Staub, Feuchtigkeit und Regen mit angesaugt und in das Innere der Gondel transportiert. Dies führt zu einer unerwünschten Verschmutzung der Gondel mit der Folge eines schnelleren Verschleißes von Bauteilen (allein wegen der abrasiven Wirkung von Staub oder Sand) und zu einer gerade bei Regenwetter unerwünscht hohen Luftfeuchtigkeit in der Gondel mit allen negativen Begleiterscheinungen.

Aufgabe der vorliegenden Erfindung ist es daher, den Eintrag von Feuchtigkeit, Sand und anderen Fremdstoffen in die Gondel sowie außen wahrnehmbare Lüftergeräusche zu verringern sowie eine effizientere Kühlung zu ermöglichen.

Diese Aufgabe wird bei einer Windenergieanlage der eingangs genannten Art dadurch gelöst, dass der Generator die Gondel in einen vorderen und einen hinteren Teil aufteilt, welche durch einen Luftspalt zwischen dem Ständer und dem Läufer verbunden sind, wobei der zumindest eine Lüfter Luft aus dem hinteren Teil der Gondel durch den Luftspalt in den vorderen Teil der Gondel bläst, wobei in der Gondel derart Abdichtungen vorgesehen sind, dass eine Luftströmung am Luftspalt vorbei im Wesentlichen verhindert wird.

Die Erfindung betrifft eine Windenergieanlage mit einem Turm und einer auf dem Turm drehbar gelagerten Gondel, welche einen Generator mit einem Läufer und einem Ständer sowie mindestens einen Lüfter aufweist, dadurch gekennzeichnet, dass der Generator die Gondel in einen vorderen und einen hinteren Teil aufteilt, welche durch einen Luftspalt zwischen dem Ständer und dem Läufer verbunden sind, wobei der zumindest eine Lüfter Luft aus dem hinteren Teil der Gondel durch den Luftspalt in den vorderen Teil der Gondel bläst, wobei in der Gondel derart Abdichtungen vorgesehen sind, dass eine Luftströmung am Luftspalt vorbei im Wesentlichen verhindert wird.

Die Erfindung geht hierbei von der Erkenntnis aus, dass die Kühlluft effizienter als bisher dem Generator bzw. dessen sich erwärmenden Teilen zugeführt werden muss. Dazu sieht die Erfindung vor, dass, wenn möglich, die gesamte Kühlluft, wenigstens aber der weitaus größte Teil der Kühlluft den Luftspalt zwischen Rotor und Generator durchströmt und ansonsten weitestgehend alle anderen Öffnungen im Rotor oder Stator des Generators verschlossen werden, um somit die Kühlluft, die durch Ventilatoren oder andere Lüftersysteme angesaugt wird, dazu zu zwingen, den Strömungsweg durch den Luftspalt zu nehmen.

Der Erfindung liegt ebenfalls die Erkenntnis zugrunde, dass die Luftströmung entlang der Windenergieanlage und insbesondere im Bereich der Gondel eine deutliche ausgeprägte Horizontalkomponente und allenfalls eine deutlich geringer ausgeprägte Vertikalkomponente aufweist. D. h., der Wind und damit die von ihm transportierten Fremdstoffe strömen von der Luvseite entlang der Gondel zur Leeseite und haben dann die Windenergieanlage passiert. Wenn also Luft durch einen nach unten offenen Luftspalt angesaugt wird, dann können allenfalls noch sehr feine Partikel mit angesaugt werden, die nämlich entgegen der Schwerkraftwirkung von dem Luftstrom nach oben getragen werden können. Damit wird das Ansaugen größerer Sand- und Staubteilchen und auch das Ansaugen von Regentropfen, die, wie jedermann weiß, erheblich schwerer sind, in hohem Maße verringert, wenn nicht sogar unterbunden.

Um über den gesamten Luftspalt verteilt eine möglichst gleichförmige Ansaugung der Außenluft zu erreichen und eine hohe Saugwirkung an ein oder zwei Stellen zu vermeiden, wird gemäß einer bevorzugten Weiterbildung der Erfindung vorgeschlagen, mehrere Lüfter innerhalb der Gondel voneinander beabstandet anzuordnen.

Besonders bevorzugt ist eine Bühne innerhalb der Gondel vorgesehen, mit unterhalb der Bühne angeordneten Lüftern und mit Luftaustritten für die angesaugte Luft oberhalb der Bühne. Dadurch gelingt es, die Bühne zur Führung des Luftstromes einzusetzen. Gleichzeitig ergibt sich unterhalb der Bühne eine Art Ruheraum, in der sich die angesaugte Luft beruhigen kann. Dabei können sich auch mitgeführte Fremdstoffe wie Staub- oder Sandpartikel der Schwerkraft folgend ablagern und werden damit in geringerer Zahl von den Lüftern innerhalb der Gondel weiter transportiert.

In einer insbesondere bevorzugten Weiterbildung der Erfindung ist die Bühne gegen die Gondel seitlich und nach unten derart abgedichtet, dass der Rest der Gondel gegenüber dem Ansaugbereich der Lüfter abgedichtet ist. Dadurch können zwar die Lüfter angesaugte Luft in den Bereich oberhalb der Bühne transportieren, diese angesaugte Luft kann aber die Bühne nicht umströmen und somit in einem Strömungs-Kurzschluss zu den Lüftern zurück gelangen. Vielmehr bleibt die von den Lüftern abgegebene Luft in dem übrigen Teil der Gondel und kann dort ihre Kühlwirkung entfalten.

Um eine besonders wirksame Kühlung des Generators zu erreichen ist eine bevorzugte Ausführungsform der Erfindung gekennzeichnet durch eine Abdichtung des Generators selbst und gegen die Gondel in der Weise, dass nur der Luftspalt zwischen Läufer und Ständer des Generators ein Abströmen der angesaugten Luft erlaubt. Die Luft kann deshalb nur durch den Luftspalt strömen und entsprechend Läufer und Startor des Generators mit größtmöglicher Wirksamkeit kühlen.

Um diese Kühlwirkung auch vorteilhaft für die Wicklungsköpfe der Startorwicklung verwirklichen zu können ist eine erfindungsgemäße Windenergieanlage bevorzugt gekennzeichnet durch am gesamten äußeren Umfang des Läufers vorgesehene Luftleitbleche, die in einem vorgegebenen Abstand den Luftspalt zwischen Läufer und Ständer abdecken und sich in radialer Richtung ein vorgegebenes Maß im Wesentlichen parallel zum Ständer des Generators erstrecken.

Eine besonders bevorzugte Weiterbildung betrifft eine Windenergieanlage mit einem unteren Abschnitt der Gondel, welcher ein vorgegebenes Maß im Wesentlichen parallel zum Turm verläuft und in einem unteren Rand endet. Um eine möglichst gleichförmige und damit auch geräuscharme Lufteinströmung zwischen Turm und Gondel zu erreichen, weist die Gondel einen wulstartigen ausgebildeten unteren Rand auf. Dieser wulstartig ausgebildete Rand verhindert weitgehend Verwirbelungen der angesaugten Luft, wie sie an einer stumpfen Kante entstehen und hilft so, eine durch die Verwirbelungen herbeigeführte Verengung des Strömungskanals und damit unerwünschte Verkleinerung des wirksamen Querschnitts und dadurch deutlich zu geringe einströmende Luftmenge mit einer daraus zwangsläufig folgenden zu geringen Kühlwirkung zu vermeiden.

In einer bevorzugten Weiterbildung der vorstehenden Ausführungsform ist eine erfindungsgemäße Windenergieanlage mit einen sich ein vorgegebenes Maß trichterförmig aufweitenden unteren Rand gezeigt. Dies führt auch ohne Anbringung eines Wulstes zu einem guten Ergebnis, da sich die Luftströmung an den sich aufweitenden Rand anschmiegen und glatt, ohne Verwirbelungen und entsprechende Geräusche und Strömungsverluste in die Gondel einströmen kann.

Die Erfindung ist dabei nicht nur für die Erstausrüstung von neuen Windenergieanlagen geeignet, sondern auch für die Nachrüstung bestehender Windenergieanlagen.

Die Erfindung erlaubt es dabei, auch bei einer bestehenden Windenergieanlage die Generatorleistung zu erhöhen und damit die gesamte Effizienz der Anlage zu verbessern, wobei die Maßnahmen zur Umsetzung der Erfindung vergleichsweise gering sind und eine nachhaltige Verbesserung der Kühlung und damit auch der Verringerung des gesamten Wärmestresses der Anlage ermöglicht.

Weitere Ausgestaltungen der Erfindung sind Gegenstand der Unteransprüche.

Nachfolgend wird ein Ausführungsbeispiel anhand der Figuren näher erläutert. Dabei zeigen:
- Fig. 1: eine Seitenansicht der Gondel einer erfindungsgemäßen Windenergieanlage;
- Fig. 2: eine vergrößerte und vereinfachte Teil-Darstellung der in Figur 1 gezeigte Gondel;
- Fig. 3: eine Draufsicht auf die Bühne im Inneren der Gondel;
- Fig. 4: eine Frontalansicht des Gondelinneren mit Blick auf den Generator;
- Fig. 5: eine vereinfachte und vergrößerte Detailansicht eines Teils des Generators;
- Fig. 6: eine Teil-Seitenansicht einer Windenergieanlage gemäß einem weiteren Ausführungsbeispiel;
- Fig. 7: einen schematischen Querschnitt durch eine Gondel der Windenergieanlage gemäß einem weiteren Ausführungsbeispiel;
- Fig. 8: einen schematischen Querschnitt einer Gondel einer Windenergieanlage gemäß einem weiteren Ausführungsbeispiel der Erfindung; und
- Fig. 9: eine perspektivische Teilschnittansicht einer Gondel gemäß einem weiteren Ausführungsbeispiel der Erfindung.

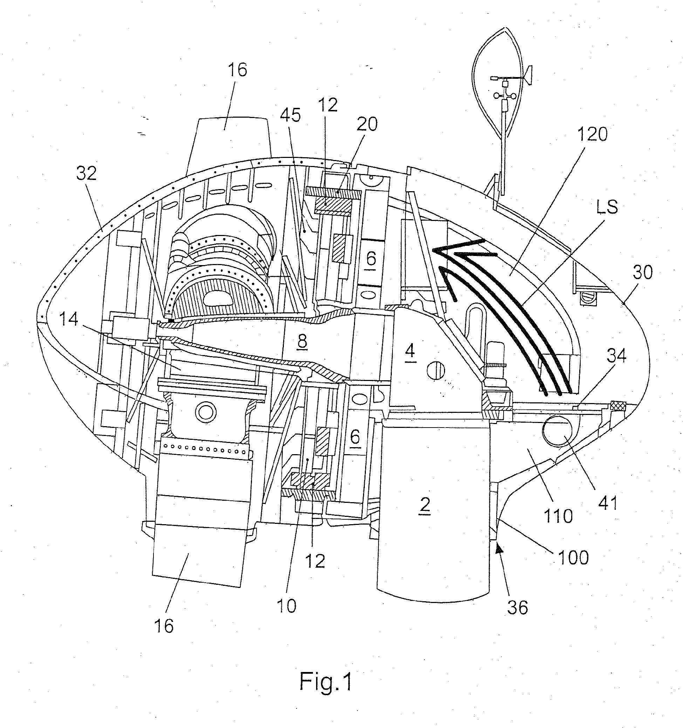

Figur 1 zeigt eine Seitenansicht einer Gondel einer erfindungsgemäßen Windenergieanlage. In Figur 1 ist auf einem Turmkopf 2 ein Maschinenträger 4 dargestellt, an dem wiederum ein Statorträger 6 und Achszapfen 8 angebracht sind. Um den Achszapfen 8 herum sind drehbar eine Nabe 14 mit den daran befestigten Rotorblättern 16 sowie ein Polrad 10 des Generators angeordnet.

Von dem Statorträger 6 wird der Stator 20 (Ständer) des Generators getragen, während das Polrad 10 (Läufer) mit Polwicklungen und Polschuhen 12 sich innerhalb des Generators zusammen mit der Nabe 14 auf dem Achszapfen 8 dreht. Der Aufbau auf dem Turmkopf 2 ist von einer Gondel 30, 32 umschlossen, die aus einer Gondelverkleidung 30 sowie einer Nabenverkleidung 32 besteht. Während die Nabenverkleidung 32 mit der Nabe 14 mitdreht, umschließt die Gondelverkleidung 30 den stillstehenden Teil der Gondel. Dabei ist mit "stillstehen" natürlich nur die durch den Wind verursachte und über die Rotorblätter 16 auf die Nabe 14 und den Generator übertragene Rotation gemeint. Die Windrichtungsnachführung bleibt dabei zunächst unberücksichtigt.

In dem hinteren, von der Gondelverkleidung 30 verkleideten Teil der Gondel befindet sich eine begehbare Gondelbühne 34. Unterhalb dieser Gondelbühne 34 ist ein Lüfter 41 dargestellt. Dieser Lüfter 41 saugt durch einen Luftspalt 6 zwischen dem Turmkopf 2 und dem unten offenen Ende der Gondelverkleidung 3 Luft von Außen an. Da sich der Ausgang des Lüfters 41 an der Oberseite der Gondelbühne 34 befindet, wird der von dem Lüfter angesaugte Luftstrom LS oberhalb der Gondelbühne 34 austreten und dann durch die Gondelverkleidung 30 zum Generator hin umgelenkt. Dadurch kommt eine gerichtete Luftströmung LS zum Generator hin und natürlich auch durch die Öffnungen des Generators hindurch zustande. Diese Luftströmung LS führt dabei Wärme ab und kühlt so den Generator.

Da die Gondelverkleidung 30 einen unteren Abschnitt 100 mit einem nach unten offenen Spalt 36 aufweist, durch welchen die Luft von dem Lüfter 41 angesaugt wird, werden allenfalls kleinere Schwebeteilchen in der Luft mit angesogen und schwerere Teile wie Staub oder Sandkörner und Regentropfen oder Hagelkörner bleiben weitestgehend außerhalb der Gondel.

Im Bereich der Nabenverkleidung 32 sind zwischen dem Generator und der Nabe 14 Luftleitbleche 45 erkennbar, welche die durch den Generator strömende Luft LS in Richtung des äußeren Generatorumfangs umleiten, so dass die dort im Luftstrom LS liegenden Wicklungsköpfe 22 der Wicklung des Stators 20 gezielt im Strömungsweg der abströmenden Luft liegen und daher ebenso gezielt gekühlt werden können. Die Luft kann dann durch einen Luftspalt zwischen der Gondelverkleidung 30 und der Nabenverkleidung 32 austreten, so dass stets frische Luft von dem Lüfter 41 nachgefördert werden kann.

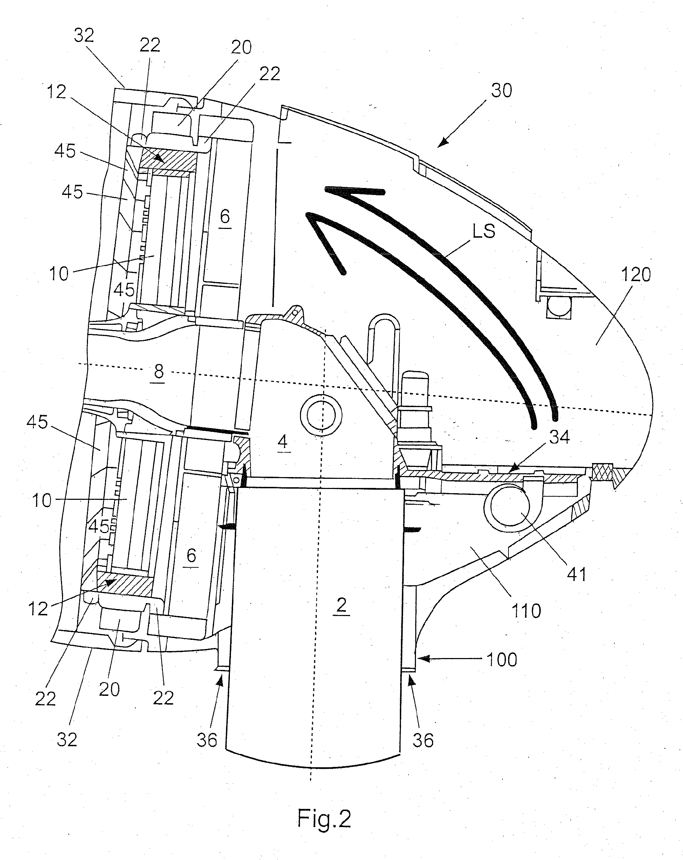

Figur 2 zeigt eine vereinfachte und vergrößerte Darstellung eines Teils der in Figur 1 gezeigten Gondel der Windenergieanlage. In dieser Figur sind wieder der auf dem Turmkopf 2 angeordnete Maschinenträger 4 und der wiederum daran angebrachte Achszapfen 8 und der Statorträger 6 gut erkennbar. An dem Statorträger 6 ist der Stator 20 des Generators mit der Statorwicklung und den Wicklungsköpfen 22 angebracht. Um den Achszapfen 8 herum ist das Polrad 10 des Generators mit den Polwicklungen und Polschuhen 12 drehbar gelagert. An der der (in dieser Figur nicht dargestellten) Nabe zugewandten Seite des. Polrades 10 sind Luftleitbleche 45 angeordnet. Diese Luftleitbleche 45 erstrecken sich über den gesamten Umfang des Polrades und sind radial nach Außen derart abgebogen, dass sie ein vorgegebenes Maß im Wesentlichen parallel zum Stator 20 und der Statorwicklung mit den Polköpfen 22 verlaufen. Im Bereich der Gondelverkleidung 30 ist wiederum gut die Gondelbühne 34 mit dem darunter angeordneten Lüfter 41 zu erkennen, dessen Luftaustritt oberhalb der Gondelbühne 34 liegt. Der Lüfter 41 saugt Außenluft durch den Luftspalt 36 an. Dieser Luftspalt 36 befindet sich zwischen dem Turmkopf 2 und dem unten offenen unteren Abschnitt 100 der Gondelverkleidung 30 dabei ist in dieser Figur gut zu erkennen, dass der untere Rand 100 der Gondelverkleidung sich ein vorgegebenes Maß trichterförmig nach außen öffnet. Dadurch kann sich der Luftstrom besser an die Innenwand dieses Bereichs der Gondelverkleidung 30 anlegen und ohne Verwirbelungen in die Gondel einströmen. Dadurch kann der gesamte Querschnitt des Luftspalts 36 als wirksame Ansaugfläche verwendet werden, die auch nicht von Verwirbelungen beeinträchtigt bzw. verringert wird.

Die durch den Luftspalt 36 angesaugte Luft kann sich im Raum 110 unterhalb der Gondelbühne 34 durch den größeren Querschnitt und die damit ein hergehende Verlangsamung der Strömung etwas beruhigen, bevor sie von dem Lüfter 41 zur Oberseite 120 der Gondelbühne 34 transportiert wird. Die an der Oberseite 120 der Gondelbühne 34 austretende Luft wird wiederum von der Gondelverkleidung 30 in Richtung des Generators 6, 10, 12, 20, 22 geführt, durchströmt den Generator und kann auf diese Weise Wärme abführen und so den Generator kühlen.

Nachdem die Luft durch den Generator hindurchgeströmt ist, wird sie von den Luftleitblechen 45 noch gezielt über die Wicklungsköpfe 22 geleitet, bevor sie durch einen Luftspalt zwischen der Gondelverkleidung 30 und der Nabenverkleidung 32 austritt und somit die Wärme abtransportiert.

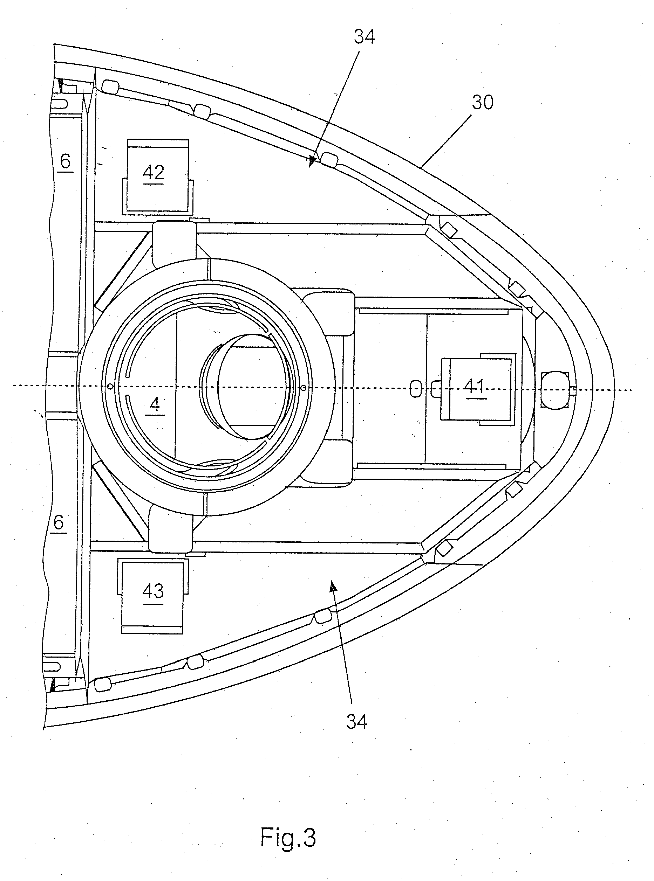

Figur 3 zeigt eine Draufsicht auf den hinteren Teil der Gondel. In dieser Figur ist gut der Maschinenträger 4 zu erkennen, an dem der Statorträger 6 des Generators angeordnet sind. In dieser Figur umschließt die Gondelbühne 34 den Maschinenträger 4 und in der Gondelbühne 34 sind drei Lüfter 41, 42 und 43 bzw., da es sich ja um eine Draufsicht handelt, deren Luftaustritte erkennbar. Daraus wird deutlich, dass die erforderliche Luftströmung LS zur Kühlung des Generators nicht nur von einem einzelnen Lüfter sondern auch von einer Mehrzahl von Lüftern erzeugt werden kann.

Ein weiterer Aspekt der Erfindung ist die Abdichtung der Gondelbühne 34 gegen die Gondelverkleidung 30. Auf diese Abdichtung ist eine große Sorgfalt zu verwenden, um einen Strömungs-Kurzschluss zu verhindern. Ein solcher Strömungs-Kurzschluss käme zustande, wenn die von den Lüftern 41, 42, 43 in den Raum oberhalb der Gondelbühne 34 geförderte Luft durch Undichtigkeiten zwischen der Gondelbühne 34 und der Gondelverkleidung 30 die Gondelbühne 34 umströmen und somit wieder in den Ansaugbereich der Lüfter 41, 42, 43 gelangen könnte. Dies hätte nämlich zur Folge, dass diese die Gondelbühne 34 umströmende Luftmenge nicht in Richtung des Generators abströmen würde und somit zur Kühlung nicht zur Verfügung stünde.

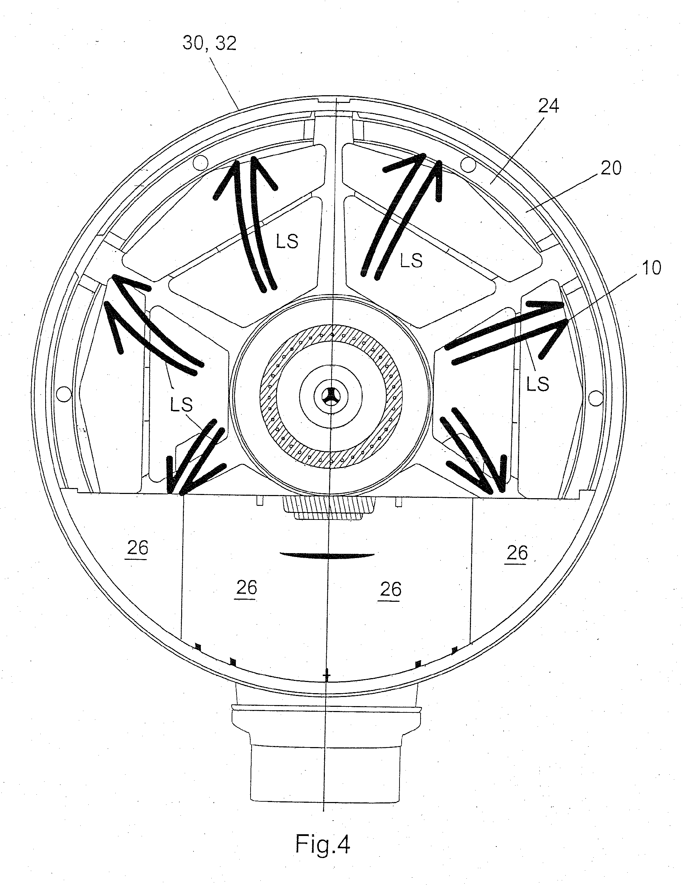

Um die Wirksamkeit der Kühlung des Generators durch die Luftströmung noch weiter zu erhöhen, sind weitere Abdichtungsmaßnahmen vorgesehen. Diese sind in Figur 4 erkennbar. In dieser Figur ist eine Frontalansicht des Generators aus Richtung der Gondelbühne dargestellt, die aber in dieser Figur nicht eingezeichnet ist.

Im mittleren Bereich ist der Achszapfen 8 gut erkennbar. Um diesen Achszapfen 8 herum ist das Polrad 10 des Generators drehbar angeordnet. Das Polrad 10 dreht sich innerhalb des Stators 20, wobei ein Generator-Luftspalt 24 zwischen Polrad 10 und Stator 20 vorhanden ist.

Um eine möglichst wirksame Kühlung zu verwirklichen, soll die Luft ausschließlich durch den Generator-Luftspalt 24 strömen. Deswegen ist das Polrad 10 in sich so abgedichtet, dass dort keine Luft hindurchströmt. Weiterhin ist der Stator 20 entgegen die Gondelverkleidung 30 ebenfalls abgedichtet. Damit bleibt dem Luftstrom LS nur der Weg durch den Generator- Luftspalt 24. Auf diese Weise wird die beste Wirkung erzielt.

Um einen Strömungs-Kurzschluss auch an der dem Generator zugewandten Seite der (in dieser Figur nicht dargestellten) Gondelbühne zu vermeiden, sind Abdeckbleche 26 vorgesehen. Diese schließen direkt unterhalb der (nicht dargestellten) Gondelbühne an, und dichten den Ansaug-Bereich gegen den Rest der Gondel ab, oder vice versa. Damit wird die Luft innerhalb der Gondel und oberhalb der Gondelbühne zum Generator hingeführt und kann aus der Betrachtungsebene dieser Figur hinter den Abdeckblechen 26 auch durch den dort befindlichen Teil des Generators-Luftspaltes 24 strömen. Dazu sind die Abdeckbleche 26 ein vorgegebenes Maß von dem Generator beabstandet, um diese Luftströmung zu ermöglichen.

Dadurch strömt die gesamte von den Lüftern geförderte Luft durch den GeneratorLuftspalt 24 und transportiert so die größtmögliche Wärmemenge ab.

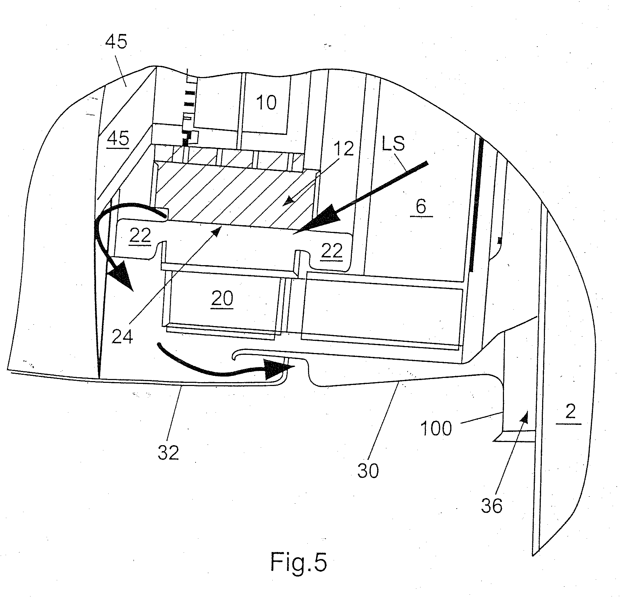

Figur 5 zeigt nochmals vergrößert einen Bereich des Generators und den Strömungsweg der Luft LS in diesem Bereich. Im rechten Teil dieser Figur ist der Turm 2 erkennbar und der zwischen den Turm 2 und dem unten offenen, sich trichterförmig aufweitenden Rand der Gondelverkleidung ausgebildete Luftspalt 36, der auch als Azimutspalt bezeichnet wird. Durch die Beschreibung der Figuren 1 bis 4 ist das Ansaugen der Luft und Abgeben in das Innere der Gondel sowie die Führung der Luft zum Generator hin. beschrieben, in dieser Figur ist erkennbar, dass die Luftströmung durch den Generator-Luftspalt 24 zwischen den am Polrad 10 angeordneten Polschuhen 12 und der Statorwicklung mit den Wicklungsköpfen 22 hindurch strömt, die am Stator 20 angebracht ist, der von dem Statorträger 6 gehalten wird. Nachdem die Luftströmung diesen Generator-Luftspalt 24 passiert hat, trifft sie auf die am Polrad 10 angeordneten Luftleitbleche 45 und wird von diesen derart umgelenkt, dass sie den in der Figur linken Wicklungskopf 22 gezielt umströmt und somit auch dort zuverlässig die Wärme abführt. Danach strömt die Luftströmung durch einen Luftspalt zwischen der Nabenverkleidung 32 und der Gondelverkleidung 30 wieder ins Freie.

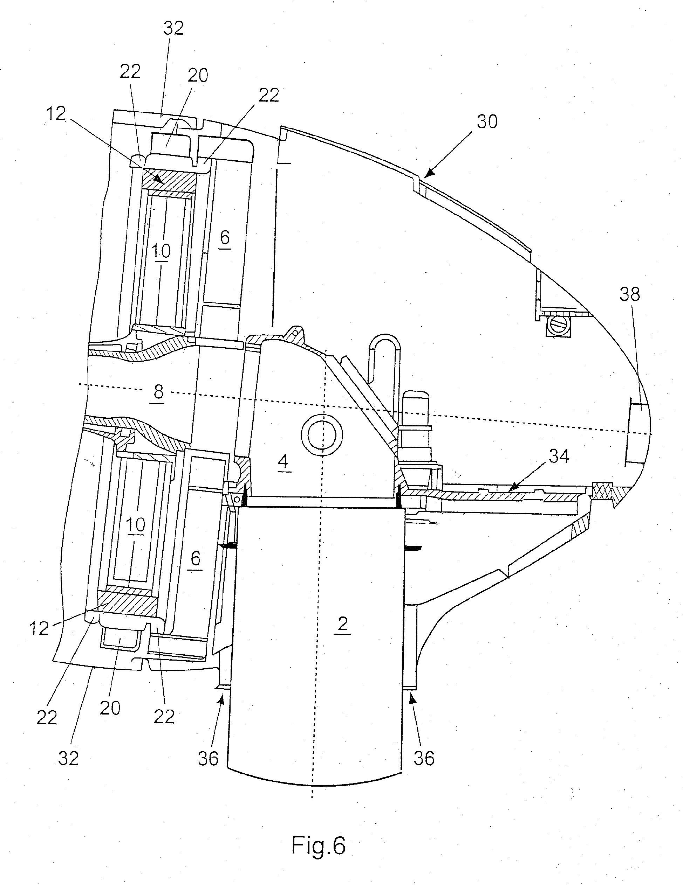

Figur 6 zeigt eine Teilansicht einer Windenergieanlage gemäß einem weiteren Ausführungsbeispiel. Im Gegensatz zu den in den Figuren 1 bis 5 gezeigten Windenergieanlagen weist diese Windenergieanlage einen Lüfter 38 an einem Ende der Gondel 30 auf. Dieser Lüfter 38 dient dazu, einen Luftstrom innerhalb der Gondel zu erzeugen, um den Generator sowie andere sich erwärmende Teile zu kühlen. Wie vorstehend beschrieben, wird dabei der Läufer 10 und der Ständer 20 des Generators derart abgedichtet, dass sich der durch den Lüfter 38 erzeugte Luftstrom lediglich durch den Luftspalt zwischen Läufer und Ständer 10, 20 vom hinteren Teil der Gondel zu dem vorderen Teil der Gondel bewegen kann und somit zur Kühlung des Generators beitragen kann. Mit anderen Worten, die Kühlung des Generators erfolgt wie in den oben beschriebenen Ausführungsbeispielen, wobei jedoch ein Lüfter 38 an der Außenseite der Gondel 30 verwendet wird, um Frischluft zuzuführen.

Gemäß der Erfindung werden die Lüftersysteme in eine Gondelbühne eingebaut und blasen die angesaugte Luft nach oben in den Bereich der Gondel, der direkt an den hinteren Teil des Generators (von der Rotorseite aus gesehen) angrenzt. Die angesaugte Luft muss dabei entweder aus dem Turm selbst angesaugt werden oder bevorzugt aus dem Turmspalt, also dem Spalt zwischen dem Maschinenträger und dem Turm, an dem auch das Azimutlager liegt, um die Anlage in einem gewünschten Winkel zum Wind anzustellen.

Der Saugraum wird dabei Richtung Generator nach vorne ebenso, zum Beispiel mit Blechen, abgedichtet, und auch der Spalt zwischen der Gondelbühne und dem Gondelgehäuse (aus glasfaserverstärktem Kunststoff) wird zum Beispiel mit Blech verschlossen.

Auf der Spinner-Seite der Gondel leiten Luftführungsbleche die den Luftspalt durchsetzende Kühlluft am Wickelkopf des Stators vorbei, und die so erwärmte Luft kann direkt durch den Luftspalt zwischen Spinner und Gondel nach außen heraustreten.

Sämtliche Öffnungen im Rotor werden dabei bevorzugt vollständig verschlossen, was nicht nur für einfache Bohrungen gilt, sondern auch für das Mannloch, also die Öffnung, die vorgesehen ist, damit im Bedarfsfall ein Servicemechaniker vom hinteren Gondelteil in den Spinner eintreten kann, um dort Wartungsarbeiten vorzunehmen. Dieses Mannloch kann beispielsweise mit einer Plane verschlossen werden, die im Reparaturfall leicht weggenommen oder geöffnet werden kann. Nach den Wartungsarbeiten kann das Mannloch mit dieser Plane wieder luftdicht verschlossen werden.

Die Gondel umschließt regelmäßig den Statorring des Stators und erfindungsgemäß ist auch vorgesehen, dass ein etwaiger Spalt zwischen der Gondel und dem Statorring durch eine Dichtung luftdicht abgeschlossen wird.

Die Erfindung hat nicht nur zur Folge, dass ein vorhandener Generator besser ausgenutzt werden kann, sondern auch, dass erheblich weniger elektrische Lüfterleistung notwendig ist, um für eine ausreichende Kühlung zu sorgen.

Wenn man sich einmal vergegenwärtigt, dass bei einer Windenergieanlage vom Typ Enercon E-48 der Generatorluftspalt etwa eine Querschnittsfläche von 0,5 m² hat, und dass ansonsten noch irgendwelche anderen Löcher im Rotor eine Querschnittsfläche von 0,1 m² aufweisen, dann verringert sich dadurch schon alleine die Lüfterleistung um wenigstens 20%.

Alternativ zu dem oben beschriebenen Luftspalt zwischen dem Turm und dem unteren Abschnitt 100 der Gondel können auch Öffnungen im unteren Abschnitt der Gondel vorgesehen werden. Derartige Öffnungen können beispielsweise Gitter, Schlitze oder dergleichen sein. Alternativ bzw. zusätzlich dazu kann eine nach Lee ausgerichtete Hutze oder nach Lee ausgerichtete Öffnungen in der Gondel vorgesehen werden, um die vorbeiströmende Luft rückwärts einzusaugen.

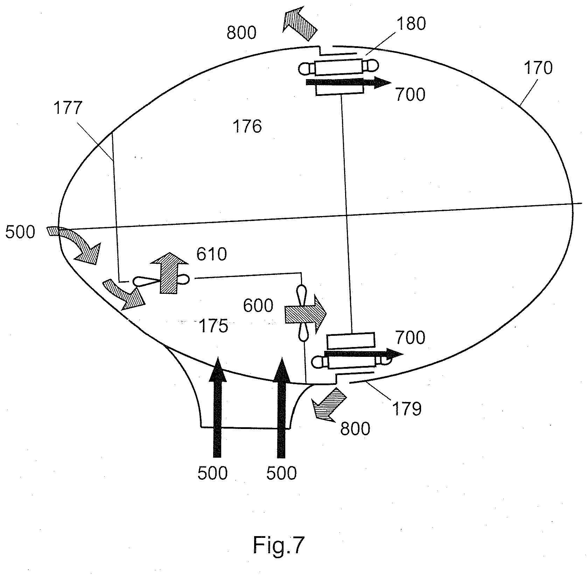

Fig. 7 zeigt einen schematischen Querschnitt durch eine Gondel der Windenergieanlage gemäß einem weiteren Ausführungsbeispiel. Die Gondel 170 weist einen Generator 180, einen Druckraum 176 und einen Saugraum 175 auf, welche durch eine Wand bzw. eine Bühne 177 voneinander getrennt sind. Die Wand 177 ist vorzugsweise im Wesentlichen luftdicht ausgestaltet und sorgfältig gegen die Gondel abgedichtet. In der Zwischenwand 177 sind zwei Lüfter 600, 610 vorgesehen, wobei einer der beiden Lüfter 600, 610 horizontal ausgerichtet ist und der zweite Lüfter 610 vertikal ausgerichtet ist. Vorzugsweise ist der vertikal ausgerichtete Lüfter derart angeordnet, dass die angesaugte Luft in den Bereich des Luftspaltes des Generators 180 geblasen wird. Der zweite Lüfter 610 bläst die Luft aus dem Saugraum 175 durch den Generatorluftspalt als Luftstrom 700 in einen Bereich hinter dem Generator 180. Somit wird Luft durch einen Turmspalt oder am Heck der Gondel in den Saugraum 175 angesaugt, von wo die Luft durch die Lüfter 600, 610 in den Druckraum 176 geblasen wird. Da in dem Druckraum 176 ein gewisser Überdruck vorhanden ist, entweicht die Luft durch den Luftspalt des Generators 180 und kühlt dabei den Generator entsprechend. Anschließend tritt die Luft aus einem Haubenluftspalt 179 an der Gondel 170 aus.

Der Luftstrom 700 durch den Generatorluftspalt wird unterstützt durch den ersten, horizontal ausgerichteten Lüfter 600. Sowohl der erste als auch der zweite Lüfter 600, 610 können jeweils durch einen oder mehrere Lüfter verwirklicht sein.

Bei der Ausgestaltung des Innenraums der Gondel sowie der Abdichtwand 177 ist es wichtig, dass diese Elemente gegen die Gondel dicht sind, da Leckstellen die Lüfterleistung und somit die Generatorkühlung vermindern.

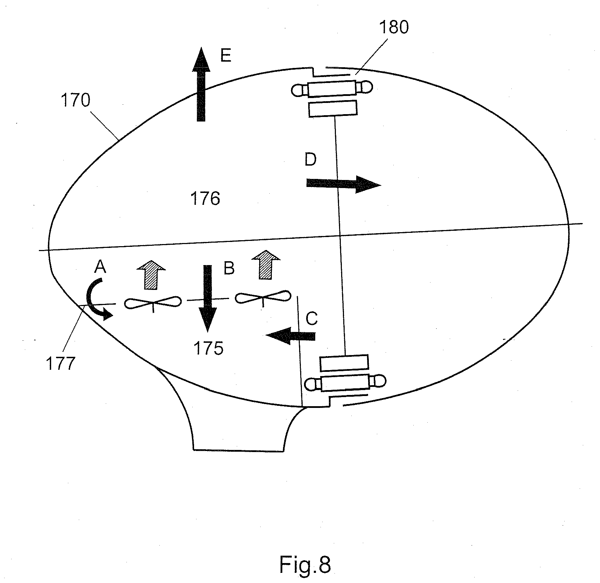

Fig. 8 zeigt einen schematischen Querschnitt einer Gondel einer Windenergieanlage gemäß einem weiteren Ausführungsbeispiel der Erfindung. In Fig. 8 werden insbesondere diejenigen Stellen gezeigt, an denen mögliche Lecks auftreten können. Ein erstes Leck A kann beispielsweise zwischen der Bühne 177 und der Haube 170 der Gondel auftreten. Weitere Lecks B können zwischen der Bühne 177 und einem Maschinenträger der Gondel, insbesondere durch Kabellöcher in der Bühne 177 auftreten. Ferner können Lecks C zwischen der Vorderwand der Abgrenzung zwischen dem Saugraum und dem Druckraum sowie der Haube der Gondel 170 auftreten. Ein weiteres Leck D kann durch Löcher im Läufer des Generators der Windenergieanlage auftreten. Ein weiteres Leck E kann durch die Haubenluke auftreten. Schließlich kann ebenfalls ein weiteres Leck durch Kabellöcher im Maschinenträger auftreten.

All die oben angeführten möglichen Lecks müssen durch geeignete Maßnahmen abgedichtet werden, um eine möglichst gute Kühlung des Generators zu erhalten.

Durch das Vorsehen einer Bühne mit einer Vorderwand und ggf. einer weiteren Wand, welche parallel zum Heck der Gondel angeordnet ist, kann das Innere der Gondel in einen Druckraum und in einen Saugraum eingeteilt werden.

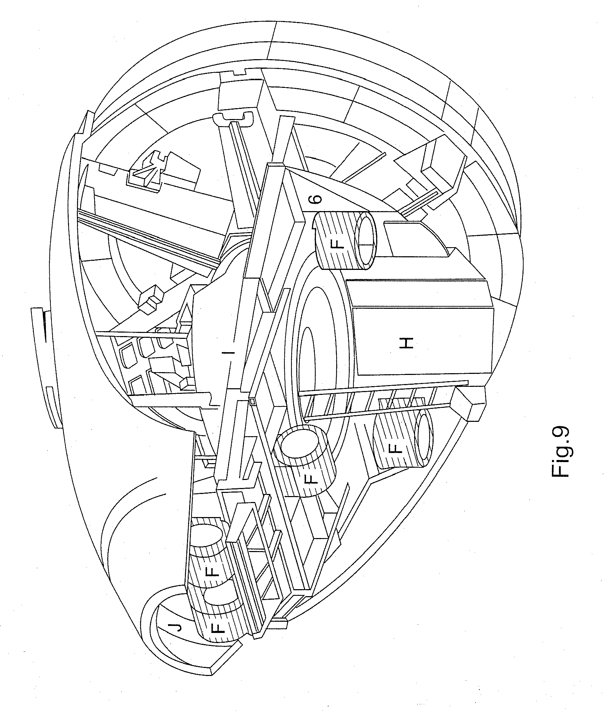

Fig. 9 zeigt eine perspektivische Teilschnittansicht einer Gondel gemäß einem weiteren Ausführungsbeispiel der Erfindung. Unter der Bühne der Gondel sind Gondelbleche G und eine Gondelplane H angeordnet. Hierbei schließen die Kanten der Bleche und der Plane mit Dichtungsblechen I gegen die Außenwand der Gondel ab. Am Heck der Gondel trennt eine Bühnenplane J den Saugraum vom Druckraum ab. Hier sind fünf Lüfter F gezeigt, welche Luft durch den Turmspalt und/oder durch das Heckloch ansaugen und die Luft nach oben bzw. nach vorne blasen. Eine derartige Ausgestaltung der Lüfter sowie der Gondel ist vorteilhaft, da weniger Lärm nach außen dringt und da weniger Regen bzw. Staub in die Anlage eingesaugt bzw. geblasen wird. Ferner können stärkere Lüfter installiert werden, und die Lüfter sind nachträglich austauschbar.

Gemäß einem weiteren Ausführungsbeispiel der Erfindung sind eine Vielzahl von Lüftern am Umfang des Generators verteilt, um Luft durch den Luftspalt des Generators zu blasen. Die Anzahl der Lüfter kann redundant ausgelegt werden, so dass, falls einer der Lüfter ausfällt, die anderen Lüfter eine ausreichende Luftmenge durch den Luftspalt des Generators blasen können, um die Kühlung aufrecht zu erhalten. Alternativ bzw. zusätzlich dazu kann die Leistung der Lüfter redundant ausgelegt werden, so dass die Lüfter einen ausgefallenen Lüfter zumindest kurzzeitig ersetzen können. Die Lüfter sind dabei vorzugsweise in der Nähe des Luftspalts am Umfang des Generators verteilt angeordnet.

Der Druckraum ist dabei derart ausgestaltet, dass ein Überdruck vorhanden ist, so dass auch einer der Lüfter ausfallen kann und trotzdem Luft durch den Luftspalt des Generators aufgrund der Druckdifferenz zwischen dem Druckraum und dem Bereich vor dem Generator fließen kann. Wie bereits oben angeführt, ist eine entsprechende Abdichtung des Druckraums vonnöten.

Gemäß einem weiteren Ausführungsbeispiel können Luftgitter über den insbesondere horizontal ausgerichteten Lüftern angeordnet sein, um somit zu vermeiden, dass Gegenstände in die Lüfter fallen können. Alternativ bzw. zusätzlich dazu kann auf den Luftgittern eine Matte vorgesehen werden, welche verhindert, dass Gegenstände in den Lüfter fallen. Die Matte ist dabei vorzugsweise lediglich an einem ihrer Enden befestigt, so dass die Matte bei Betrieb des Lüfters durch den durch den Lüfter erzeugten Luftstrom nach oben bewegt wird, und sobald der Lüfter abgeschaltet wird, wieder auf das Luftgitter fällt. Somit wird gewährleistet, dass die Lüfter auch vor kleinen Gegenständen geschützt werden, während der Betrieb der Lüfter nicht wesentlich gestört wird.

Durch den in Fig. 7 gezeigten senkrecht ausgerichteten Lüfter 600 kann der Luftstrom verkürzt werden und unmittelbar bzw. in die Nähe des Luftspalts des Generators gerichtet werden. Somit wird ein Luftstrom sowohl nach oben als auch nach vorne ermöglicht. Die dazu benötigte Luft wird durch den Turmspalt und ein Loch im Heck verwendet.

Typischerweise weist der Generatorluftspalt eine Querschnittsfläche von 0,5 m² auf. Wenn jedoch beispielsweise eine einzige Kabeldurchführung in der Bühne offen bleibt (0,1 m²), dann verringert sich die Kühlerleistung um etwa 20 %.

## Patentansprüche

1. Windenergieanlage mit
einem Turm, einer auf dem Turm drehbar gelagerten Gondel, welche einen Generator (6, 10. 12, 20, 22) mit einem Läufer (10) und einem Ständer (20) sowie mindestens einen Lüfter (41, 42, 43) zum Erzeugen eines Luftstroms (LS) aufweist,
wobei der Generator (6, 10, 12, 20, 22) die Gondel- (30) in einen vorderen und einen hinteren Teil aufteilt, welche durch einen Luftspalt zwischen dem Ständer (20) und dem Läufer (10) verbunden sind,
wobei der zumindest eine Lüfter (41, 42, 43) Luft aus dem hinteren Teil der Gondel durch den Luftspalt In den vorderen Teil der Gondel bläst,
wobei in der Gondel derart Abdichtungen vorgesehen sind, dass eine Luftströmung am Luftspalt vorbei Im Wesentlichen verhindert wird, und
einer Gondelverkleidung (30), welche derart ausgestaltet ist, dass der Luftstrom (LS) des mindestens einen Lüfters (41, 42, 43) von der Gondelverkleidung (30) in Richtung des Generators (6, 10, 12, 20, 22) geführt wird.

2. Windenergieanlage nach Anspruch 1,
**dadurch gekennzeichnet, dass** weniger als 20 %, bevorzugt weniger als 5 % der Luft, die durch die Lüfter (41, 42, 43) vom hinteren in den vorderen Teil der Gondel geblasen wird, nicht den Strömungsweg durch den Luftspalt zwischen Ständer (20) und Läufer (10) nimmt,

3. Windenergieanlage nach einem der Ansprüche oder 2,
**dadurch gekennzeichnet, dass** die Gondel (30) in ihrem hinteren Teil eine Trennwand (34) aufweiset, welche den hinteren Teil der Gondel in einen ersten und einen zweiten Teil aufteilt.

4. Windenergieanlage nach Anspruch 3,
**dadurch gekennzeichnet, dass** im zweiten Teil des hinteren Teils der Gondel (30) wenigstens ein Lüfter ausgebildet ist, welcher die angesaugte Luft durch die Trennwand (34) in den ersten Teil des hinteren Teiles der Gondel (30) bläst.

5. Windenergieanlage nach einem der Ansprüche 3 oder 4,
**dadurch gekennzeichnet, dass** die Trennwand (34) aus einem Blech besteht, welches einen horizontalen Teil, einen begehbaren Teil und einen vertikalen Teil aufweist.

6. Windenergieanlage nach einem der Ansprüche 1 bis 5,
**dadurch gekennzeichnet, dass** im vorderen Teil der Gondel Luftströmungsleitelements (45) ausgebildet sind, die den durch den Luftspalt tretenden Luftstrom an Wicklungen (Wickelkopf) des Ständers (20) varbeileiten.

7. Windenergieanlage nach einem der Ansprüche 1 bis 6,
**dadurch gekennzeichnet, dass** der Läufer (10) des Generators einen Durchgang (Mannloch) aufweist, welcher verschlossen ist, so dass kaum bzw, keine Luft durch diesen strömt.

8. Windenergieanlage nach einem der Ansprüche 1 bis 7,
**dadurch gekennzeichnet, dass** der Ständer (20) des Generators einen Statorring aufweist und zwischen dem Statorring und der diesen Ring umgebenden Gondel Dichtmittel ausgebildet sind.

9. Windenergieanlage nach einem der Ansprüche 1 bis 8,
**dadurch gekennzeichnet, dass** die Lüfter (41, 42, 43) Luft ansaugen, die von außen durch einen Luftspalt zwischen Turm (2) und Gondel (30) in die Gondel (30) strömt.

10. Windenergieanlage nach einem der Ansprüche 3 bis 5,
**dadurch gekennzeichnet, dass** eine zweite vertikale Trennwand vorgesehen Ist, welche sich derart ein die Bühne anschließt, dass sie sich parallel zu dem Generator erstreckt, wobei ein weiterer Lüfter in der zweiten vertikalen Trennwand derart angeordnet ist, dass die durch diesen Lüfter angesaugte Luft auf oder in die Nähe des Luftspalts des Generators gerichtet wird.

11. Windenergieanlage nach einem der vorherigen Ansprüche,
**dadurch gekennzeichnet, dass** ein Luftgitter oberhalb jedes Lüfters angeordnet ist,
wobei eine Matte an lediglich einem ihrer Enden auf dem Luftgitter befestigt wird.

## Claims

1. A wind power installation comprising
a pylon, a pod which is mounted rotatably on the pylon and which has a generator (6, 10, 12, 20, 22) having a rotor (10) and a stator (20), and at least one fan (41, 42, 43) for producing an air flow (LS),
wherein the generator (6, 10, 12, 20, 22) divides the pod (30) into a front and a rear part which are connected by an air gap between the stator (20) and the rotor (10),
wherein the at least one fan (41, 42, 43) blows air out of the rear part of the pod through the air gap into the front part of the pod,
wherein sealing means are provided in the pod in such a way that an air flow past the air gap is substantially prevented, and
a pod fairing (30) which is so designed that the air flow (LS) of the at least one fan (41,42,43) is guided by the pod fairing (30) in the direction of the generator (6, 10, 12, 20, 22).

2. A wind power installation according to claim 1 **characterised in that** less than 20% and preferably less than 5% of the air which is blown by the fans (41, 42, 43) from the rear part into the front part of the pod does not take the flow path through the air gap between the stator (20) and the rotor (10).

3. A wind power installation according to one of claims 1 and 2 **characterised in that** in its rear part the pod (30) has a partition (34) which divides the rear part of the pod into a first part and a second part.

4. A wind power installation according to claim 3 **characterised in that** provided in the second part of the rear part of the pod (30) is at least one fan which blows the air which is drawn in through the partition (34) into the first part of the rear part of the pod (30).

5. A wind power installation according to one of claims 3 and 4 **characterised in that** the partition (34) comprises a plate which has a horizontal part, a part which can be walked upon and a vertical part.

6. A wind power installation according to one of claims 1 to 5 **characterised in that** provided in the front part of the pod are air flow guide elements (45) which guide the air flow passing through the air gap past windings (winding head) of the stator (20).

7. A wind power installation according to one of claims 1 to 6 **characterised in that** the rotor (10) of the generator has a passage (manhole) which is closed so that scarcely any air or no air flows therethrough.

8. A wind power installation according to one of claims 1 to 7 **characterised in that** the stator (20) of the generator has a stator ring and sealing means are provided between the stator ring and the pod surrounding said ring.

9. A wind power installation according to one of claims 1 to 8 **characterised in that** the fans (41, 42, 43) draw in air which flows from the outside through an air gap between the pylon (2) and the pod (30) into the pod (30).

10. A wind power installation according to one of claims 3 to 5 **characterised in that** there is provided a second vertical partition which adjoins the platform in such a way that it extends parallel to the generator, wherein a further fan is arranged in the second vertical partition in such a way that the air which is sucked in by that fan is directed on to or into the proximity of the air gap of the generator.

11. A wind power installation according to one of the preceding claims **characterised in that** an air grating is arranged above each fan,
wherein a mat is fixed on the air grating at only one of the ends of the mat.

## Revendications

1. Eolienne avec
une tour, une nacelle montée de manière à pouvoir tourner sur la tour, laquelle présente un générateur (6, 10, 12, 20, 22) avec un rotor (10) et un stator (20) ainsi qu'au moins un ventilateur (41, 42, 43) servant à produire un flux d'air (LS),
dans laquelle le générateur (6, 10, 12, 20, 22) divise la nacelle (30) en une partie avant et en une partie arrière, qui sont reliées par un entrefer entre le stator (20) et le rotor (10),
dans laquelle l'au moins un ventilateur (41, 42, 43) souffle de l'air hors de la partie arrière de la nacelle à travers l'entrefer dans la partie avant de la nacelle,
dans laquelle des systèmes d'étanchéification sont prévus dans la nacelle de telle manière qu'un écoulement d'air est sensiblement empêché au niveau de l'entrefer, et
un habillage de nacelle (30), qui est configuré de telle manière que le flux d'air (LS) de l'au moins un ventilateur (41, 42, 43) est guidé depuis l'habillage de nacelle (30) en direction du générateur (6, 10, 12, 20, 22).

2. Eolienne selon la revendication 1,
**caractérisée en ce que** moins de 20 %, de manière préférée moins de 5 % d'air, qui est soufflé par les ventilateurs (41, 42, 43) depuis la partie arrière dans la partie avant de la nacelle, ne prend pas le trajet d'écoulement à travers l'entrefer entre le stator (20) et le rotor (10).

3. Eolienne selon l'une quelconque des revendications 1 et 2,
**caractérisée en ce que** la nacelle (30) présente, dans sa partie arrière, une paroi de séparation (34), qui divise la partie arrière de la nacelle en une première et en une seconde partie.

4. Eolienne selon la revendication 3,
**caractérisée en ce qu'**est réalisé, dans la seconde partie de la partie arrière de la nacelle (30), au moins un ventilateur, qui souffle l'air aspiré à travers la paroi de séparation (34) dans la première partie de la partie arrière de la nacelle (30).

5. Eolienne selon l'une quelconque des revendications 3 et 4,
**caractérisée en ce que** la paroi de séparation (34) est constituée d'une tôle, qui présente une partie horizontale, une partie pouvant être empruntée et une partie verticale.

6. Eolienne selon l'une quelconque des revendications 1 à 5,
**caractérisée en ce que** des éléments de guidage d'écoulement d'air (45) sont réalisés dans la partie avant de la nacelle, lesquels guident le flux d'air entrant par l'entrefer au niveau d'enroulements (tête d'enroulement) du stator (20).

7. Eolienne selon l'une quelconque des revendications 1 à 6,
**caractérisée en ce que** le rotor (10) du générateur présente un passage (trou d'homme), qui est fermé de sorte que guère d'air ou aucun air ne circule à travers ce dernier.

8. Eolienne selon l'une quelconque des revendications 1 à 7,
**caractérisée en ce que** le stator (20) du générateur présente une bague de stator, et des moyens d'étanchéité sont réalisés entre la bague de stator et la nacelle entourant ladite bague.

9. Eolienne selon l'une quelconque des revendications 1 à 8,
**caractérisée en ce que** les ventilateurs (41, 42, 43) aspirent de l'air, qui circule depuis l'extérieur, par un entrefer entre la tour (2) et la nacelle (30), dans la nacelle (30).

10. Eolienne selon l'une quelconque des revendications 3 à 5,
caracétrisée en ce qu'une deuxième paroi de séparation verticale est prévue, laquelle se raccorde de telle manière à la plate-forme qu'elle s'étend de manière parallèle par rapport au générateur, dans laquelle un autre ventilateur est disposé dans la deuxième paroi de séparation verticale de telle manière que l'air aspiré par ledit ventilateur est dirigé sur ou à proximité de l'entrefer du générateur.

11. Eolienne selon l'une quelconque des revendications précédentes,
**caractérisée en ce qu'**une grille de ventilation est disposée au-dessus de chaque ventilateur, dans laquelle une natte est fixée sur la grille de ventilation au niveau seulement d'une de ses extrémités.
